Europäisches Patentamt

European Patent Office

Office européen des brevets

(11) Publication number: **0 459 043 A1**

# EUROPEAN PATENT APPLICATION

(21) Application number: 90305866.7

(22) Date of filing: 30.05.90

(51) Int. Cl.5: **A01G 9/02**

(43) Date of publication of application:
04.12.91 Bulletin 91/49

(84) Designated Contracting States:
AT BE CH DE DK ES FR GB GR IT LI LU NL SE

(71) Applicant: **Goldrein, Iain Saville**
**4 Linden Avenue, Crosby**
**Liverpool L23 8UL(GB)**

(72) Inventor: **Goldrein, Iain Saville**
**4 Linden Avenue, Crosby**
**Liverpool L23 8UL(GB)**

(74) Representative: **Quest, Barry et al**
**M'CAW & Co. 41-51 Royal Exchange Cross**
**Street**
**Manchester M2 7BD(GB)**

(54) **Planting structure.**

(57) A planting structure (1) for displaying plants in gardens has a wall (2) which is mounted on a support (4) so as to provide a ramp surface in which there are a number of plant receptacles (6) arranged one above the other. An irrigation pipe (12) may be provided and drainage holes may be incorporated in the receptacles (6).

Multiple walls (2) can be linked together if desired to form partial or complete enclosures of different configurations.

This invention relates to a planting structure particularly for displaying plants in gardens.

With a traditional garden layout, plants are usually displayed in beds which are generally horizontal possibly with elevated features such as rockeries, low walls or the like. However with this kind of layout it may be difficult to obtain a satisfactory display where the garden is small or where there is an obtrusive ugly vertical structure such as a garden wall, fence or the like.

Also insofar as the traditional layout has many plants at or close to the ground level, maintainence can be difficult or inconvenient especially for the more elderly gardener, or one suffering from a back complaint.

An object of the present invention is to provide a planting structure with which a relatively extensive high level display can be achieved in a simple and convenient manner without requiring a large ground area.

According to the invention, therefore, there is provided a planting structure comprising a wall and a support, the support being arranged to mount the wall in inclined disposition relative to a ground surface so that the wall provides an upwardly inclined ramp surface, said ramp surface containing multiple integral receptacles at different heights to receive growing medium for plants.

With this arrangement, plants can be displayed at elevated positions, for example in the manner of a terrace, whereby an attractive prominent display can be obtained without requiring a particularly large ground area. Moreover, there is the possibility that ugly vertical structures can be concealed by appropriate positioning of the planting structure. Further, insofar as some or all of the plants are disposed well above ground level it is possible for a gardener to maintain the plants without excessive bending down. Furthermore the possibility of psychologically increasing the garden area can be appreciated by the fact that the visual angle presented to the eye of an observer at ground level by the display of the plants may be increased thereby providing the appearance of a larger area.

Yet further, as will become apparent from the following description, the structure can give rise to enhanced creative display possibilities and provide a convenient means of supporting ornamental objects, and functional devices such as devices for watering, lighting etc.

The wall may comprise a framework or panel or solid body of any suitable shape and size and may be formed as a one-piece integral structure or as multiple interconnected structures. A modular arrangement may be used whereby separate wall units are assembled to give a desired size and configuration for the ramp surface.

The ramp surface may be generally planar or may be stepped or otherwise shaped as desired.

The wall may be formed from plastics or glass fibre reinforced resin or any other suitable material.

The support may comprise brackets and/or feet and/or a framework and/or solid body by means of which the planting structure can stand on a ground surface and/or can be fixed to an upright surface such as a garden wall or fence or the like. The support may be attached to or formed integrally with the wall (or the respective unit in the case of the above mentioned modular construction).

The receptacles may be formed in one piece with the wall or may be attached as separate parts thereto. The receptacles may be spaced with portions of the wall therebetween. Alternatively the receptacles may be linked closely together so that the receptacles collectively define the said wall.

The receptacles may be in the form of troughs and they may be parallel to each other and may extend wholly across the ramp surface. Alternatively the receptacles may comprise circular wells or wells of any desired geometric configuration or combination of configurations.

The receptacles or some of them may have holes for drainage and/or for inlet of water. In the latter respect it is possible to provide a water supply beneath the wall which is arranged to direct water into the receptacles from below. This water supply may comprise a channel.

The channel may be in the form of a pipe and may have a plurality of holes in its upper surface through which water can be sprayed. The pipe may be supported in position by a bracket or the like.

Alternatively, an irrigation channel for connection to a source of water may be provided, said channel being arranged to discharge water into said receptacles from above. The channel may be in the form of a closed pipe and said channel may be provided with a plurality of holes in a surface thereof, through which water may reach the receptacles. Preferably said holes are provided in a lower surface of said channel. Alternatively irrigation may be achieved by way of an upright central irrigation pipe, for example extending substantially perpendicular to the ground surface, alongside the structure. In this case the pipe may terminate at or adjacent an upper edge of the structure in a nozzle or the like which, when the pipe is connected to a source of water, gives rise to a fountain-like spray of water into the receptacles.

In order to aid distribution of water throughout the structure respective adjacent receptacles may be interconnected by for example holes provided in a part of the wall separating the respective receptacles, the water thus being able to drain from one receptacle to another in a direction from the uppermost to the lowermost receptacle.

Alternatively or additionally to the above arrangment, drainage of water may be achieved by way of connections from drainage holes in said receptacles to a central drainage channel. The central drainage channel may be in the form of a closed pipe and may extend level for example generally perpendicular to the ground structure. The connections may be in the form of closed pipes or may be open channels or the like.

The planting structure may incorporate electrical cables or ducts for cables, mounting for electrical lighting, platforms or caves or the like for ornaments (such as garden gnomes) or any other suitable additional device or structure.

The planting structure may be used in an existing outdoor garden or to form a garden e.g. on a roof or paved area in any suitable position.

The planting structure of the invention may be used alone or in combination with other like structures to form an assembly of desired configuration, the respective structures being separate but juxtaposed or being interconnected to form an overall integral structure as desired.

In a particularly preferred embodiment there are a plurality of said walls which are arranged to be linked together to form an enclosure with the said ramp surfaces thereof directed outwardly. The structure may be formed in such a manner that a partial or complete enclosure is defined. The enclosure may be of generally conical or pyramidal form with circular or polygonal or other cross-section.

With this arrangement it is possible for planting structures to be conveniently and efficiently irrigated and it is also possible to create a pleasing effect.

The invention will now be described further by way of example only and with reference to the accompanying drawings of which:-

Figure 1 is a sectional side view of one form of planting structure according to the invention;

Figure 2 is a diagrammatic plan view of an assembly of planting structures linked together; and

Figure 3 is a sectional side view of an alternative form of planting structure according to the invention.

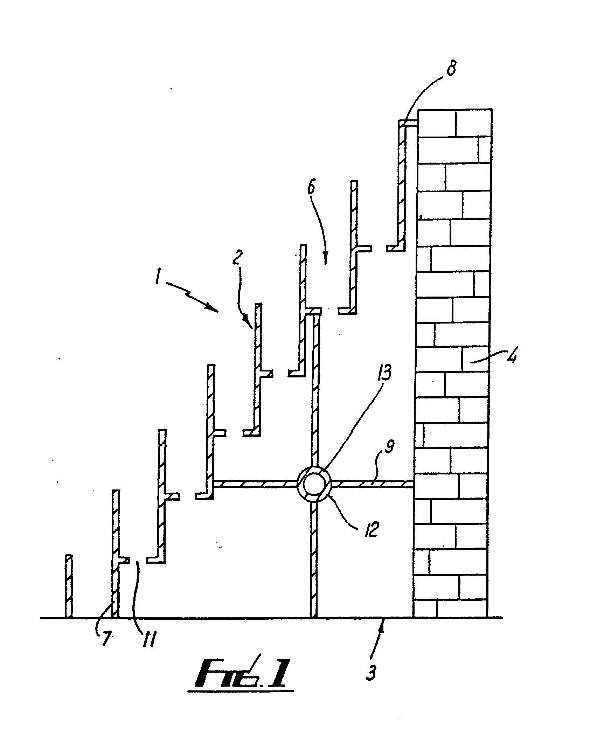

The planting structure 1 of Figure 1 comprises a wall 2 which is mounted between a ground surface 3 and a garden wall 4 by means of a support arrangement.

The wall 2 of the structure is a moulded one-piece, hollow fibreglass body having a number of parallel, elongate troughs 6. The support arrangement comprises a ground engaging construction 7 along a bottom edge of the wall, a bracket 8 extending along a top edge of the wall for attachment to the garden wall, and an internal framework 9 described hereinafter. With the ground engagement construction 7 resting on the ground surface 3 and the bracket 8 attached to the garden wall 4, the troughs 6 are disposed above each other in a step-like configuration so that the mouths of the troughs 6 collectively define an inclined ramp surface.

All of the troughs 6 have substantially the same depth, the depth of each individual trough 6 being constant over the entire length of the trough 6. The bottom of each trough 6 is perforated by equispaced holes 11.

For a pleasing appearance the wall 2 is made from dark brown (soil-coloured) fibreglass.

Between the underside of the wall 2 and the ground surface 3 and the garden wall 4 there is a pipe 12 extending generally parallel to the troughs 6. The pipe 12 has a number of equispaced holes (not shown) in its upper surface 13.

The pipe 12 is retained in position by the above mentioned internal framework 9 which extends between and is secured to or bears against the structure wall 2, the garden wall 4 and the ground surface 3. One end of the pipe 12 is adapted to accept a water supply (not shown) such as a hosepipe or the like.

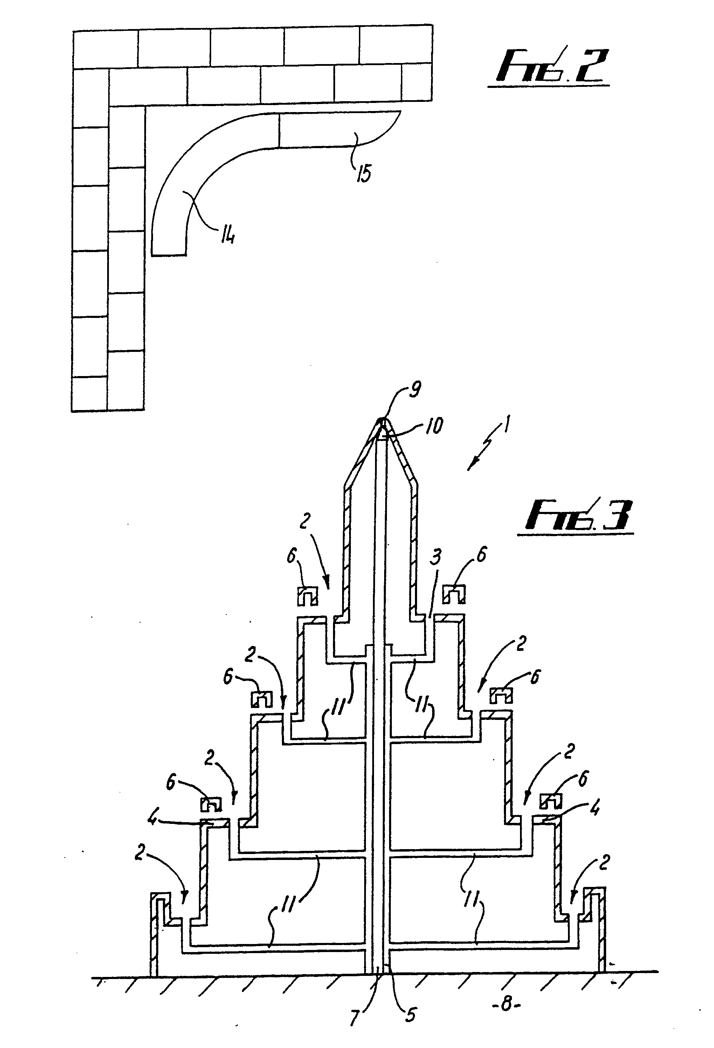

The planting structure 1 is further provided with means (not shown) whereby it can be assembled with other such structures. These linking means may comprise bolts, screws or the like extending through opposed flanges. In such an assembly variations of the shape of the basic structure 1 may be used in order to fit around corners (as shown in Fig. 2). Also the ends of the assembly may be closed off to give a neat finish. Thus, the assembly may comprise one or more corner plantings structures 14 and end planting structures 15. The corner structure 14 could have a similar appearance to the basic structure 1 but could be of semicircular shape. The end structure 15 could also have a similar appearance to the basic structure 1 but could have closed ends. Alternatively, the ends could be closed off with add-on panels or the like.

In use, with the planting structure 1 or assembly of structures mounted in position, soil is placed in the troughs 6 and plants are planted in the soil. Watering of the plants can be achieved by connecting a hosepipe to the central pipe 12. Water is sprayed from the holes (not shown) in the pipe 12 and reaches the soil through the holes 11 in the troughs 6. Thus, it is possible to water all the plants simultaneously and quickly in an easy and convenient manner. Furthermore, a large proportion of the plants are raised with respect to the ground, thus facilitating ease of maintainence.

An alternative embodiment is shown in Figure 3. The planting structure 1 is of generally conical form and is constructed from multiple end structures, each being similar to that shown in Figure 2. That is, each end structure comprises an upwardly inclined wall having multiple integral troughs therein, the wall being shaped to define a ramp surface which is curved in the direction of the troughs, the curvature being such that four such structures can be joined together in any suitable manner by for example screws or bolts or by welding or bonding of the common edges of the structure 1 to form a closed conical configuration. The structure may be formed from transparent, or at least translucent, material such as glass fibre reinforced resin. Alternatively the material may be coloured if desired. The conical planting structure 1 provides multiple troughs 2 of generally circular form, each trough having holes 3 in the base 4 thereof for connection to a drainage pipe 5, and holes in a side wall 6 thereof for connection to the neighbouring trough below, allowing drainage of water therebetween.

Irrigation of the structure 1 is effected by way of a central irrigation pipe 7 connected to a source of water and extending substantially perpendicular to the ground surface 8 and generally along the axis of symmetry of the structure 1. The pipe 7 terminates at the top 9 of the structure 1 in a nozzle 10 which sprays water over the structure 1 creating a fountain-like appearance.

Drainage of excess water from the troughs 2 is achieved by way of drainage connections 11 in the form of pipes which connect the holes 3 in the base 4 of the troughs 2 to the central drainage pipe 5. The central drainage pipe 5 extends substantially parallel to the irrigation pipe 7.

Further devices can also be provided within the structure for example a light, preferably a strip form may be disposed parallel to the central pipes 5, 7 which can act to illuminate the floral display giving a most pleasing effect.

It is of course to be understood that the invention is not intended to be restricted to the details of the above embodiment which are described by way of example only.

Thus, for example, it is possible to construct other accessories for the structure 1 also from fibreglass. These can include simulated rocks, rock pools and waterfalls. It is also possible to include fittings for electric lights in the structure, allowing it to be illuminated to create a more pleasing effect. A further alternative would be for the holes (not shown) in the pipe 12 and the holes 11 in the trough 6 to be connected by for example tubing to reduce water wastage in the structure.

Although the drawings show a regular array of troughs 6, in practice an irregular arrangement may be used and, for example, if desired, platforms may be interposed between troughs 6 to support ornaments or the like.

The wall may have a steeper inclination than that shown in the drawing whereby the base is much shorter than the vertical height.

As an alternative to the generally planar inclined wall shown, a curved wall may be used. In particular the wall may be curved or depressed downwardly to give a concave ramp surface.

The structure may be adapted for use inside a house or conservatory or the like by for example using a scaled down in size version.

**Claims**

1. A planting structure comprising a one-piece integral wall and a support, the support being arranged to mount the wall in inclined disposition relative to a ground surface so that the wall provides an upwardly inclined ramp surface, said ramp surface containing multiple integral discrete receptacles at different heights to receive growing medium for plants.

2. A planting structure according to claim 1 wherein said wall is formed from glass fibre reinforced resin.

3. A planting structure according to claim 1 or claim 2 wherein said ramp surface is stepped.

4. A planting structure according to any one of claims 1 to 3 wherein said support comprises a framework adapted to mount the wall relative to an upright surface.

5. A planting structure according to any one of claims 1 to 4 wherein said support is formed integrally with said wall.

6. A planting structure according to any one of claims 1 to 5 wherein said receptacles are formed in one piece with said wall.

7. A planting structure according to any one of claims 1 to 6 wherein said receptacles are attached to said wall as separate parts thereto.

8. A planting structure according to any one of claims 1 to 7 wherein said receptacles are spaced with portions of the wall therebetween.

9. A planting structure according to any one of claims 1 to 8 wherein said receptacles are in the form of troughs extending wholly across the ramp surface.

10. A planting structure according to any one of claims 1 to 8 wherein said receptacles comprise circular wells.

11. A planting structure according to any one of claims 1 to 10 wherein said receptacles are provided with holes for drainage and/or inlet of water.

12. A planting structure according to claim 11 wherein a water supply is provided below said wall which is arranged to direct water through said holes into said receptacles from below.

13. A planting structure according to claim 12 wherein said water supply comprises a channel adapted for connection to a source of water.

14. A planting structure according to claim 13 wherein said channel comprises a pipe.

15. A planting structure according to claim 13 or 14 wherein said channel has a plurality of holes in its upper surface through which water can be sprayed.

16. A planting structure according to claim 11 wherein an irrigation channel adapted for connection to a source of water is provided, said channel being arranged to discharge water into said receptacles from above.

17. A planting structure according to claim 16 wherein said irrigation channel comprises a closed pipe having a plurality of holes in a lower surface thereof.

18. A planting structure according to claim 16 wherein said irrigation channel comprises an upright central irrigation pipe adapted for connection to a source of water; said pipe terminating in a nozzle at or adjacent an upper edge of said structure.

19. A planting structure according to any one of claims 1 to 18 wherein respective adjacent said receptacles are interconnected to allow drainage to occur from one receptacle to another.

20. A planting structure according to any one of claims 1 to 19 wherein each said receptacle is provided with connections to a central drainage channel whereby drainage can occur via said channel.

21. A planting structure according to claim 20 wherein said drainage channel comprises an upright closed pipe.

22. A planting structure according to claim 20 or 21 wherein said connections comprise closed pipes.

23. A planting structure as defined in claim 1 comprising a plurality of walls arranged to be linked together to form an enclosure with the said ramp surfaces thereof directed outwardly.

24. A planting structure according to claim 23 wherein said walls are arranged such that a complete enclosure is defined.

25. A planting structure according to claim 24 wherein said complete enclosure is of conical form.

_Fig.1_

_Fig.2_

_Fig.3_

European
Patent Office

EUROPEAN SEARCH
REPORT

Application Number

EP 90 30 5866

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | GB-A-2 225 202 (GOLDREIN)<br>* the whole document *<br>— — — | 1-25 | A 01 G 9/02 |
| X,Y | US-A-4 123 873 (CANOVA)<br>* abstract; figures 1-4 *<br><br>— — — | 1,5,6,8,<br>10,24,25,<br>2,3,7,9,<br>11-14,16- | |
| X | EP-A-0 300 690 (GULDBERG)<br>* column 2, line 24 - column 3, line 21; figures 1, 2, 7 *<br>— — — | 1,4,6,8 | |
| Y,A | CH-A-2 054 46 (BURKI)<br>* claims 1-3; figures 1-5 *<br>— — — | 3,9,23,1,<br>4,8,24 | |
| Y | GB-A-2 096 443 (PRYCE)<br>* abstract; claim 2; figures 1-3 *<br>— — — | 2 | |
| Y | US-A-4 295 296 (KINGHORN)<br>* abstract * * column 2, line 49 - column 4, line 21; figures 3, 5, 8 *<br>— — — | 7,11,16,<br>17 | |
| Y | FR-A-2 568 448 (HUBERT)<br>* abstract; figures 1-3 *<br>— — — | 19 | TECHNICAL FIELDS SEARCHED (Int. Cl.5)<br><br>A 01 G |
| Y | GB-A-1 096 956 (NATIONAL RESEARCH DEVELOP-MENT)<br>* page 2, lines 50 - 101 *<br>— — — | 12-14 | |
| Y | US-A-4 419 843 (JOHNSON)<br>* abstract; figure 1 *<br>— — — | 18 | |
| A | EP-A-0 031 154 (NEUMANN)<br>* abstract; figures 5-10 *<br>— — — — — | 1 | |

The present search report has been drawn up for all claims

| Place of search | Date of completion of search | Examiner |
|---|---|---|
| The Hague | 01 February 91 | PERNEY Y.J. |